# EUROPEAN PATENT SPECIFICATION

(11) **EP 3 149 076 B1**
(45) Date of publication and mention of the grant of the patent: **14.03.2018**
(21) Application number: 15720302.7
(22) Date of filing: 23.04.2015
(51) Int. Cl.: C08K 5/5313, C08L 23/08, C08L 33/10, C08L 67/02

(54) **POLYMER COMPOSITION AND HEAT-SHRINKABLE ARTICLE**
POLYMERZUSAMMENSETZUNG UND WÄRMESCHRUMPFARTIKEL
COMPOSITION POLYMÈRE ET ARTICLE THERMORÉTRACTABLE

(30) Priority: 28.05.2014 GB 201409413
(43) Date of publication of application: 05.04.2017
(73) Proprietor: Tyco Electronics UK Ltd., Swindon, Wiltshire SN3 5HH (GB)
(72) Inventor: KURUP, Sreeni, Swindon Wiltshire SN3 6EY (GB)
(74) Representative: Johnstone, Douglas Ian
(86) International application number: PCT/EP2015/058777
(87) International publication number: WO 2015/180899

(56) References cited:
- WO-A1-2009/110230
- US-A1- 2011 315 423
- US-A1- 2012 225 291

## Description

The present invention relates to a polymer composition and a heat shrinkable article which is for instance used as electrically insulating tubing.

Dimensionally recoverable articles such as heat-recoverable tubing are well-known. Such articles are often used to provide electrical and environmental insulation over spliced wires or to protect areas of cables where there are breaks in the insulation. To provide adequate recoverability and flexibility, the articles generally comprise polymers. For many applications it is necessary that the polymer be flame-retarded in order to minimize the risk of damage in the event of a fire. Such flame-retardancy may be achieved either by the use of a halogen-containing polymer, e.g. a fluoropolymer, or by the addition of a halogenated material, e.g. a brominated or chlorinated compound such as decabromodiphenylethane to a non-halogenated polymer, e. g. polyolefins such as polyethylene, ethylene copolymers or polyesters. Polymeric compounds with such flame retardancy are useful as they self extinguish when removed from flame. However, they do have disadvantages, as they can undergo continuous combustion to produce a large quantity of smoke, or they can thermally decompose, releasing corrosive gases, e.g. halogen acids, which can be detrimental to personnel or sensitive electronic equipment.

Attempts have been made to incorporate halogen-free flame-retardants into polymer resins to overcome the above disadvantages. For example, US 2012/225291, US 2011/315423 and WO 2009/110230 disclose articles made from a composition comprising polyester based thermoplastic elastomers and ethylene acrylic elastomers, and include dialkyl phosphinates as flame retardants. Halogen-free flame-retardants such as alumina trihydrate (ATH) must be used in relatively large concentration in order to give fully useful flame-retardancy to the resulting compositions. However, when a large concentration of halogen-free flame-retardant is added to a polymer resin, the resulting resin composition, when extruded, exhibits reduced physical properties, especially in tensile strength and elongation, and also greatly reduced aging and electrical properties. In addition, these compositions are difficult to extrude and expand into tubing, especially thin wall tubing.

When the composition is used in the form of tubing, a number of product-related flame tests are conducted. Of particular importance for Military and Aerospace applications are IEC 60684-3-271, VG 95343-5 Type D, SAE-AS-I-23053/16 which contains several different aspects, including measurements of the physical properties, i.e. tensile strength and elongation, and a measurement of the performance of the tubing when exposed to a flame. According to VG 95343-5 Type D, combustion behaviour test number 5.12.1.1, a section of heat shrink tube of size approximately 150 mm in length is shrunk on to a metal mandrel of approximately 200 mm in length, the diameter of which rounded up to the nearest full mm, must be 10% greater than the inner diameter of the freely shrunk tubing. The test specimens are then marked and placed in the combustion chamber, marking the position of the specimen, point of application of the flame etc. according to the prescribed test method. The duration of application of flame was 60 seconds. To pass the flame test, after the test flame has been removed, the combustion must extinguish of its own within 15 seconds for type D products and 30 seconds for Type L products.

It is also desirable that the tubing have adequate performance for continuous use at elevated temperature, for example at 150°C for 3000 hours. Such high temperature performance is particularly important when the tubing is used for military applications.

Halogen-containing tubing made from a copolyester/ethylene acrylic copolymer blend in which the flame retardant comprises decabromodiphenylethane is known. An example of conventional halogenated tubing is DR25™ tubing, available from TE Connectivity. While such tubing has acceptable physical and flammability properties, for some markets a zero-halogen containing material is required having high chemical resistance, low weight and superior tensile and elongation properties of the polymer material.

Hence, there is a need to provide a higher temperature rated, highly chemical resistant, flame-retardant polymer composition which in particular can be used as heat shrinkable tubing. In particular, a temperature rating of 150 °C should be reached and at the same time the polymer composition should be halogen free.

This objective is solved by the subject matter of the independent claims. Advantageous embodiments are the subject matter of the dependent claims.

The present invention is based on the idea that by using an organic phosphorus based flame-retardant in a matrix being a blend of a polyester based thermoplastic elastomer and an ethylene acrylic elastomer, a lightweight, halogen free, yet high strength heat shrinkable product can be achieved. In particular, a 150 °C (150C) rating can be reached by using the polymer composition according to the present invention. This polymer composition is in particular suitable for producing heat shrinkable tubing and molded parts, non heat shrinkable cable jackets, wire and optical cable sheathing.

According to an advantageous embodiment of the present invention, the polyester based thermoplastic elastomer comprises a copolymer of polybutylene terephthalate and polyalkylene-ether glycol. An example for a commercially available suitable thermoplastic elastomer is HYTREL-4056. This particular material exhibits a unique combination of mechanical, physical and chemical properties and in particular offers the advantage of outstanding resiliency, flexibility, high flexing fatigue resistance and resistance to mechanical damage.

According to the present invention, the polymer matrix is a blend of the polyester based thermoplastic elastomer and ethylene acrylic elastomer. It could be shown that in order to provide the sufficiently high flexibility of the end products, blending a polyester based thermoplastic elastomer with a pure elastomer leads to a material with outstanding performance. Particularly convincing results could be achieved by an ethylene acrylic elastomer, which has excellent solvent resistance over a wide range of solvents and temperature, and at the same time offers good heat aging properties.

Such an ethylene acrylic elastomer may for instance be purchased under the registered trade name VAMAC.

The ratio between the polyester based thermoplastic elastomer and the ethylene acrylic elastomer has been carefully chosen in order to achieve an improved solvent resistance, a high flexibility, reduced heat aging and low temperature properties. In particular, the amount of thermoplastic elastomer can be chosen between 30% to 40% by weight of the total composition, whereas the ethylene acrylic elastomer is 15% to 25% by weight of a total composition.

According to a first advantageous example, the polyester based thermoplastic elastomer amounts to 36 % and the ethylene acrylic elastomer is 19% by weight.

A second advantageous formulation contains 35 weight percent of the polyester based thermoplastic elastomer and 19 weight percent of the ethylene acrylic elastomer.

In order to reduce the flammability of the end products, a flame retardant is added to the elastomer matrix.

Traditional halogenated flame retardants are for instance bromine compounds in combination with antimony trioxide. Bromine compounds can generate toxic materials when burning, but also during processing, recycling or disposal, and create serious concerns to humans and environment. Therefore, it is known to use metal hydroxides as halogen free flame retardants and a comparatively high percentage loading of between 35 and 60 weight percent is required to meet the flammability requirements of VG (VG 95343-5. Type L). It could be shown that such a high loading has detrimental effects on the mechanical properties of the end product.

The present invention provides an alternative, more efficient halogen-free and non-toxic flame retardant which has minimal impact on the mechanical and electrical properties due to its comparably low dosage in the polymer matrix. Metal salts of dialkyl phosphinates, in particular aluminium dialkyl phosphinates, were found to be compatible with the blend of polyester based thermoplastic elastomer and ethylene acrylic elastomer according to the present invention. Such metal salt phosphinates are described for instance in the published international application WO 2011/043260A1.

Key properties of aluminium dialkyl phosphinates, such as high phosphorus content, good thermostability, low density and very low affinity towards moisture, have made this material a good choice for developing a lightweight, halogen-free, flame retarded and fluid resistant heat shrink formulation according to the present invention.

In the present case, the low temperature flexibility of the blend of polyester based thermoplastic elastomer and ethylene acrylic elastomer has been affected by adding 18 to 22 weight percent of aluminium dialkyl phosphinate. Therefore, a plasticizer can be added to improve the low temperature flexibility of this blend. For instance, polyester adipate may be added in a 5 to 6 weight percent loading to significantly improve the low temperature properties in the range between -55 °C to -75 °C. An example of a plasticizer that can advantageously be used with the formulations according to the present invention is PLASTHALL P-650 .

As polyester elastomers are sensitive to moisture and require stabilizers to prevent hydrolytic degradation, an antihydrolysis agent can be added to the formulation to protect the polyester elastomer from hydrolytic degradation. For instance, the antihydrolysis agent Stabaxol P which is an aromatic polymeric carbodiimide can be effectively used to prevent the hydrolytic degradation.

A heat stabilizer can be added to the formulation to improve the heat aging properties of the formulation. According to a further advantageous embodiment, a radiation crosslinking agent can be added to the formulation. Such a radiation crosslinking agent promotes polymer crosslinking when exposed to radiation, such as from a high energy electron beam. The radiation crosslinking promoter may be chosen from among those conventionally used to promote crosslinking of polymers, including triallyl cyanurate (TAC), triallyl isocyranurate (TAIC), triallyl trimellitate, triallyl trimesate, tetrallyl pyromellitate, the diallyl ester of 1,1,3,-trimethyl-5-carboxy-3-(4-carboxyphenyl)indene, trimethylolpropane trimellitate (TMPTM), pentaerythritol trimethacrylate, tri(2-acryloxyethyl) isocyanurate, tri(2-methacryloxyethyl) trimellitate, and the like.

In the following, two particular embodiments of formulations according to the present invention will be explained. For a person skilled in the art, it is however clear that several deviations can be made from the given percentages without departing from the general principle of the present invention.

Table 1 summarizes a first zero halogen formulation according to the present invention.

**Table 1**

| **Description** | **MATERIAL** | **Wt %** |
|---|---|---|
| Polyester based thermoplastic elastomer | HYTREL-4056 | 35.6 |
| Antihydrolysis agent in a masterbatch | Hytrel 10MS | 8.4 |
| Ethylene acrylic elastomer | Vamac | 19.0 |
| Polyester adipate | PLASTHALL-P-650 | 5.3 |
| Flame retardant | Exolit 1240 or Exolit OP 935 | 22 |
| Other Additives | Additives include antioxidants, processing aid, fungicide, pigments, and a crosslinking enhancer | 9.7 |

By this particular formulation, a lightweight, 150 °C rated, halogen-free, fire retarded crosslinkable polymer composition is provided for manufacturing heat shrinkable products. In particular, non-halogenated heat shrinkable tubing can be fabricated from the formulation which is highly chemical resistant, lightweight and has superior tensile and elongation properties.

The organic aluminium phosphinate was melt mixed into the polyester elastomer based system which additionally contains several antioxidants and processing aids for better heat aging properties and improved processability. It could be shown that 18 to 21 weight percent of the organic aluminium phosphinate is sufficient to meet the flammability requirements of VG 95343-5 TypeD specification. Although higher percentages, for instance 25%, can also be used, this might deteriorate the mechanical properties of the polymer.

Under certain application conditions, it can be required that a smoke suppressant is added to the composition according to the present invention. In the embodiment shown below as table 2, the smoke retardant FireBrake yielded satisfactory results.. According to the present invention, this substance was added with a load of approximately 5 weight percent.

The following table 2 summarizes an example of a composition according to the present invention that additionally contains a smoke suppressant.

**Table 2**

| **Description** | **MATERIAL** | **Wt %** |
|---|---|---|
| Polyester based thermoplastic elastomer | HYTREL-4056 | 34.8 |
| Antihydrolysis agent in a masterbatch | Hytrel 10MS | 8.2 |
| Ethylene acrylic elastomer | Vamac | 18.6 |
| Polyester adipate | PLASTHALL-P-650 | 5.1 |
| Flame retardant | Exolit 1240 or Exolit OP 935 | 19 |
| Smoke suppressant | FireBrake | 4.9 |
| Other Additives | Additives include antioxidants, processing aid, fungicide, pigments, and a crosslinking enhancer | 9.4 |

According to the present invention, the flame retardant Exolit 1240 or Exolit OP 935 was used as the aluminium dialkyl phosphinate. According to the present invention, Exolit 1240 and Exolit OP 935 have yielded best results in meeting the requirements of VG 95343-5 Type D combustion behaviour.

In summary, the formulation according to the present invention provides a flame retarded, halogen-free, lightweight polymer formulation , which meets the requirements of VG 95343-5 TypeD including fluid resistance at elevated temperatures (23 °C to 100 °C) a service temperature range from -55 / -75 °C to 150 °C, and good flexibility. The formulation may be used for heat shrinkable tubing or for cable jackets.

## Claims

1. A heat shrinkable article made from a radiation-crosslinked polymer composition comprising:
30 to 40% by weight, based on the total composition, of a polyester based thermoplastic elastomer,
15 to 25% by weight, based on the total composition, of an ethylene acrylic elastomer, and
an organic phosphorus based flame retardant,
wherein said organic phosphorus based flame retardant comprises a metal salt of a dialkyl phosphinate.

2. A heat shrinkable article according to claim 1, wherein said polyester based thermoplastic elastomer comprises a copolymer of polybutylene terephthalate and polyalkylene-ether glycol.

3. A heat shrinkable article according to claim 1 or 2, wherein said metal salt is aluminium diethyl phosphinate.

4. A heat shrinkable article according to claim 1, 2 or 3, wherein said ethylene acrylic elastomer comprises a terpolymer of ethylene, methyl acrylate, and a cure site monomer.

5. A heat shrinkable article according to one of the preceding claims, wherein the polymer composition further comprises an antihydrolysis agent and/or stabilizing agent.

6. A heat shrinkable article according to claim 5, wherein said antihydrolysis and stabilizing agent comprises an aromatic polymeric carbodiimide and/or an aromatic amine type antioxidant.

7. A heat shrinkable article according to one of the preceding claims, wherein the polymer composition further comprises a plasticizer.

8. A heat shrinkable article according to claim 7, wherein said plasticizer comprises a polyester adipate.

9. A heat shrinkable article according to any preceding claim, wherein said polymer composition includes a radiation crosslinking promoter chosen from among those conventionally used to promote crosslinking of polymers, including triallyl cyanurate (TAC), triallyl isocyranurate (TAIC), triallyl trimellitate, triallyl trimesate, tetrallyl pyromellitate, the diallyl ester of 1,1,3,-trimethyl-5-carboxy-3-(4-carboxyphenyl)indene, trimethylolpropane trimellitate (TMPTM), pentaerythritol trimethacrylate, tri(2-acryloxyethyl) isocyanurate, tri(2-methacryloxyethyl) trimellitate and combinations thereof.

10. A heat shrinkable article according to one of the preceding claims, wherein the polymer composition further comprises a smoke suppressant.

11. Polymer composition according to claim 10, wherein the smoke suppressant comprises zinc borate.

12. A heat shrinkable article according to one of the preceding claims, wherein said organic phosphorus based flame retardant is 15% to 25% by weight of the total composition.

13. A heat shrinkable article, according to any preceding claim, in the form of tubing or molded parts.

14. A heat shrinkable article according to claim 13, being formed as an electrically insulating tubing.

15. Cable, wire or optical cable having a sheathing or jacket of electrically insulating tubing according to claim 14.

## Patentansprüche

1. Wärmeschrumpfbarer Artikel, gefertigt aus einer strahlungsvernetzten Polymerzusammensetzung, der Folgendes umfasst:
30 bis 40 Gew.-%, auf der Basis der Gesamtzusammensetzung, eines thermoplastischen Elastomers auf Polyesterbasis,
15 bis 25 Gew.-%, auf der Basis der Gesamtzusammensetzung, eines Ethylen-Acryl-Elastomers, und
ein organisches Flammschutzmittel auf Phosphorbasis,
wobei das genannte organische Flammschutzmittel auf Phosphorbasis ein Metallsalz eines Dialkylphosphinats umfasst.

2. Wärmeschrumpfbarer Artikel nach Anspruch 1, wobei das genannte thermoplastische Elastomer auf Polyesterbasis ein Copolymer aus Polybutylenterephthalat und Polyalkylenetherglykol umfasst.

3. Wärmeschrumpfbarer Artikel nach Anspruch 1 oder 2, wobei das genannte Metallsalz Aluminiumdiethylphosphinat ist.

4. Wärmeschrumpfbarer Artikel nach Anspruch 1, 2 oder 3, wobei das genannte Ethylen-Acryl-Elastomer ein Terpolymer aus Ethylen, Methylacrylat und einem Härtungsstellenmonomer umfasst.

5. Wärmeschrumpfbarer Artikel nach einem der vorherigen Ansprüche, wobei die Polymerzusammensetzung ferner ein Antihydrolysemittel und/oder Stabilisierungsmittel umfasst.

6. Wärmeschrumpfbarer Artikel nach Anspruch 5, wobei das genannte Antihydrolyse- und Stabilisierungsmittel ein aromatisches polymeres Carbodiimid und/oder ein aromatisches Antioxidationsmittel des Amintyps umfasst.

7. Wärmeschrumpfbarer Artikel nach einem der vorherigen Ansprüche, wobei die Polymerzusammensetzung ferner einen Weichmacher umfasst.

8. Wärmeschrumpfbarer Artikel nach Anspruch 7, wobei der genannte Weichmacher ein Polyesteradipat umfasst.

9. Wärmeschrumpfbarer Artikel nach einem vorherigen Anspruch, wobei die genannte Polymerzusammensetzung einen Strahlungsvernetzungspromotor beinhaltet, ausgewählt aus denen, die herkömmlicher Weise zum Fördern von Vernetzung von Polymeren benutzt werden, einschließlich Triallylcyanurat (TAC), Triallylisocyanurat (TAIC), Triallyltrimellitat, Triallyltrimesat, Tetrallylpyromellitat, das Diallylester von 1,1,3-Trimethyl-5-carboxy-3-(4-carboxyphenyl)inden, Trimethylolpropantrimellitat (TMPTM), Pentaerythritoltrimethacrylat, Tri(2-acryloxyethyl)isocyanurat, Tri(2-methacryloxyethyl)trimellitat und Kombinationen davon.

10. Wärmeschrumpfbarer Artikel nach einem der vorherigen Ansprüche, wobei die Polymerzusammensetzung ferner ein Rauchunterdrückungsmittel umfasst.

11. Polymerzusammensetzung nach Anspruch 10, wobei das Rauchunterdrückungsmittel Zinkborat umfasst.

12. Wärmeschrumpfbarer Artikel nach einem der vorherigen Ansprüche, wobei das genannte organische Flammschutzmittel auf Phosphorbasis 15 bis 25 Gew.-% der Gesamtzusammensetzung beträgt.

13. Wärmeschrumpfbarer Artikel nach einem vorherigen Anspruch in Form von Schlauch oder geformten Teilen.

14. Wärmeschrumpfbarer Artikel nach Anspruch 13, der als elektrisch isolierender Schlauch ausgebildet ist.

15. Kabel, Draht oder optisches Kabel mit einer Hülle oder einem Mantel aus elektrisch isolierendem Schlauch nach Anspruch 14.

## Revendications

1. Article thermo-rétractable réalisé à partir d'une composition polymère réticulée par radiation comprenant :
30 à 40% en poids, sur la base de la composition totale, d'un élastomère thermoplastique à base de polyester,
15 à 25% en poids, sur la base de la composition totale, d'un élastomère éthylène acrylique, et
un retardateur de flamme à base de phosphore organique,
dans lequel ledit retardateur de flamme à base de phosphore organique comprend un sel métallique d'un phosphinate de dialkyle.

2. Article thermo-rétractable selon la revendication 1, dans lequel ledit élastomère thermoplastique à base de polyester comprend un copolymère de polytéréphtalate de butylène et polyalkylène éther glycol.

3. Article thermo-rétractable selon la revendication 1 ou 2, dans lequel ledit sel métallique est le diéthyl phosphinate d'aluminium.

4. Article thermo-rétractable selon la revendication 1, 2 ou 3, dans lequel ledit élastomère éthylène acrylique comprend un terpolymère d'éthylène, méthylacrylate, et un monomère à site de durcissement.

5. Article thermo-rétractable selon l'une quelconque des revendications précédentes, dans lequel la composition polymère comprend en outre un agent anti-hydrolyse et/ou un agent de stabilisation.

6. Article thermo-rétractable selon la revendication 5, dans lequel ledit agent anti-hydrolyse et de stabilisation comprend un carbodiimide polymérique aromatique et/ou un antioxydant aromatique de type amine.

7. Article thermo-rétractable selon l'une quelconque des revendications précédentes, dans lequel la composition polymère comprend en outre un plastifiant.

8. Article thermo-rétractable selon la revendication 7, dans lequel ledit plastifiant comprend un polyester adipate.

9. Article thermo-rétractable selon l'une quelconque des revendications précédentes, dans lequel ladite composition polymère comporte un promoteur de réticulation par radiation choisi parmi ceux conventionnellement utilisés pour promouvoir la réticulation de polymères, dont le cyanurate de triallyle (TAC), l'isocyanurate de triallyle (TAIC), le trimellitate de triallyle, le trimésate de triallyle, le pyromellitate de tétrallyle, l'ester diallylique de 1,1,3,-triméthyl-5-carboxy-3-(4-carboxyphényl)indène, le trimellitate de triméthylolpropane (TMPTM), le triméthacrylate de pentaérythritol, l'isocyanurate de tri(2-acryloxyéthyl), le triméllitate de tri(2-méthacryloxyéthyl) et leurs combinaisons.

10. Article thermo-rétractable selon l'une quelconque des revendications précédentes, dans lequel la composition polymère comprend en outre un suppresseur de fumée.

11. Composition polymère selon la revendication 10, dans lequel le suppresseur de fumée comprend du borate de zinc.

12. Article thermo-rétractable selon l'une quelconque des revendications précédentes, dans lequel ledit retardateur de flamme à base de phosphore organique constitue de 15% à 25% en poids de la composition totale.

13. Article thermo-rétractable, selon l'une quelconque des revendications précédentes, sous forme de tubes ou de pièces moulées.

14. Article thermo-rétractable selon la revendication 13, sous forme de tube électriquement isolant.

15. Câble, câble métallique ou câble optique comportant une gaine ou une chemise de tube électriquement isolant selon la revendication 14.
